(19) Europäisches Patentamt
European Patent Office
Office européen des brevets

(11) EP 2 389 005 A1

(12) EUROPEAN PATENT APPLICATION
published in accordance with Art. 153(4) EPC

(43) Date of publication:
23.11.2011 Bulletin 2011/47

(51) Int Cl.:
H04N 13/00 (2006.01)    H04N 5/225 (2006.01)

(21) Application number: 10839295.2

(22) Date of filing: 17.12.2010

(86) International application number:
PCT/JP2010/072733

(87) International publication number:
WO 2011/078065 (30.06.2011 Gazette 2011/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.12.2009 JP 2009294547

(71) Applicant: Sony Corporation
Tokyo 108-0075 (JP)

(72) Inventor: MORIFUJI, Takafumi
Tokyo 108-0075 (JP)

(74) Representative: Davies, Simon Robert
D Young & Co LLP
120 Holborn
London, EC1N 2DY (GB)

(54) DEVICE, METHOD AND PROGRAM FOR IMAGE PROCESSING

(57)    The present invention relates to image processing apparatus and method, and a program which can display a multi-viewpoint image having more appropriate disparity.

For a plurality of captured images successively captured in the state in which an imaging apparatus 11 is moving, a strip region determining section 23 sets strip regions of which the number and positional relation are determined by viewing environment parameters indicating the viewing environment of a multi-viewpoint image, in each of the captured images. A panoramic image generating section 25 generates a plurality of panoramic images by extracting and synthesizing the strip regions in the plurality of captured images. By using the plurality of panoramic images, a display selecting section 27 generates a multi-viewpoint image in which a subject is displayed with a disparity that varies with the viewpoint position of the user, and causes the multi-viewpoint image to be displayed on a display section 28. By determining the positional relation between the strip regions in each captured image in accordance with the viewing environment parameters, a multi-viewpoint image having more appropriate disparity with respect to the viewing environment can be obtained. The present invention can be applied to a camera.

FIG. 3

EP 2 389 005 A1

**Description**

Technical Field

The present invention relates to image processing apparatus and method, and a program, in particular, image processing apparatus and method, and a program which make it possible to display a multi-viewpoint image having more appropriate disparity.

Background Art

In the related art, a technique is known which generates a panoramic image by overlaying and synthesizing a plurality of still images obtained by capturing with an imaging apparatus while panning the imaging apparatus in a predetermined direction (see, for example, PTL 1). Since a panoramic image is an image obtained by arranging and synthesizing a plurality of still images, according to a panoramic image, a region wider than the region in the space to be captured when capturing a single still image can be displayed as a subject.

Also, in the case when a plurality of still images are captured while panning an imaging apparatus in order to obtain a panoramic image, the same subject is sometimes included in several still images. In such a case, since the same subject in different still images is captured from positions that are different from each other, it means that disparity or parallax is produced.

When this is exploited to generate a plurality of panoramic images having disparity with respect to each other from a plurality of still images, by simultaneously displaying some or all of those panoramic images by the lenticular scheme, a multi-viewpoint image can be displayed.

Here, a multi-viewpoint image is an image in which the same subject is displayed with a disparity that varies with the position from which to view the display screen on which the image is displayed, that is, the viewpoint position of the user. For example, when using a plurality of panoramic images as they are to create a multi-viewpoint image, the panoramic images are displayed in such a way that two of those plurality of panoramic images which are determined by the viewpoint position of the user are respectively observed by the right eye and left eye of the user. At this time, since the two panoramic images observed by the user have disparity, the subject in the panoramic images appears stereoscopically to the user.

Citation List

Patent Literature

PTL 1: Japanese Patent No. 3168443

Summary of Invention

Technical Problem

However, depending on the viewing environment such as the size of the screen of a display apparatus on which to display a multi-viewpoint image, the appropriate magnitude of disparity that should be provided between the individual images that make up the multi-viewpoint image varies. However, with the above-described technique, it has been not possible to obtain a multi-viewpoint image having appropriate disparity in accordance with the viewing environment.

The present invention has been made in view of the above circumstances, and accordingly the object of the present invention is to make it possible to obtain a multi-viewpoint image having more appropriate disparity that suits the viewing environment.

Solution to Problem

An image processing apparatus according to a first aspect of the present invention is an image processing apparatus which generates a plurality of synthetic images used for generation of a multi-viewpoint image and having disparity with respect to each other, on the basis of a plurality of captured images obtained by capturing with imaging means while moving the imaging means, and includes strip region determining means for determining, for each of the synthetic images, strip regions in each of the captured images from which images used for generation of each of the synthetic images are extracted, on the basis of information indicating a viewing environment of the multi-viewpoint image, synthetic image generating means for generating each of the synthetic images by extracting the images in the strip regions from the captured images and synthesizing the images, and multi-viewpoint image generating means for generating the multi-viewpoint image, in which a subject whose disparity varies with a viewpoint position of a user is displayed stereoscopically, by using the synthetic images.

The strip region determining means can be configured to determine respective positions of the strip regions so that the strip regions in each of the captured images are in a positional relation determined by a screen size of a display destination for the multi-viewpoint image which is indicated by the information indicating the viewing environment.

The strip region determining means can be configured to determine the positions of the strip regions so that in each of the captured images, a distance between the strip regions that are adjacent to each other becomes shorter for the strip regions located closer to an edge of each of the captured images.

An image processing method or a program according to the first aspect of the present invention are an image processing method or a program which generates a plurality of synthetic images used for generation of a multi-viewpoint image and having disparity with respect to each other, on the basis of a plurality of captured images obtained by capturing with imaging means while moving the imaging means, and includes the steps of determining, for each of the synthetic images, strip regions in each of the captured images from which images used for generation of each of the synthetic images are extracted, on the basis of information indicating a viewing environment of the multi-viewpoint image, generating each of the synthetic images by extracting the images in the strip regions from the captured images and synthesizing the images, and generating the multi-viewpoint image, in which a subject whose disparity varies with a viewpoint position of a user is displayed stereoscopically, by using the synthetic images.

In the first aspect of the present invention, in image processing which generates a plurality of synthetic images used for generation of a multi-viewpoint image and having disparity with respect to each other, on the basis of a plurality of captured images obtained by capturing with imaging means while moving the imaging means, for each of the synthetic images, strip regions in each of the captured images, from which images used for generation of each of the synthetic images are extracted, are determined on the basis of information indicating a viewing environment of the multi-viewpoint image, each of the synthetic images is generated by extracting the images in the strip regions from the captured images and synthesizing the images, and the multi-viewpoint image, in which a subject whose disparity varies with a viewpoint position of a user is displayed stereoscopically, is generated by using the synthetic images.

An image processing apparatus according to a second aspect of the present invention is an image processing apparatus which generates a plurality of synthetic images used for generation of a multi-viewpoint image and having disparity with respect to each other, on the basis of a plurality of captured images obtained by capturing with imaging means while moving the imaging means, and includes strip region determining means for determining, for each of the synthetic images, strip regions in each of the captured images from which images used for generation of each of the synthetic images are extracted, synthetic image generating means for generating each of the synthetic images by extracting the images in the strip regions from the captured images and synthesizing the images, and multi-viewpoint image generating means for selecting several of the synthetic images on the basis of information indicating a viewing environment of the multi-viewpoint image, and generating the multi-viewpoint image, in which a subject whose disparity varies with a viewpoint position of a user is displayed stereoscopically, by using the selected synthetic images.

The multi-viewpoint image generating means can be configured to generate the multi-viewpoint image by selecting the synthetic images generated from the images in the strip regions that are in a positional relation determined by a screen size of a display destination for the multi-viewpoint image which is indicated by the information indicating the viewing environment.

The multi-viewpoint image generating means can be configured to generate the multi-viewpoint image anew when the viewing environment is changed, on the basis of information indicating the changed viewing environment.

The multi-viewpoint image generating means can be configured to change the positional relation determined by the screen size when a change is made to a display magnification of the multi-viewpoint image as the viewing environment, in accordance with the change in the display magnification.

An image processing method or a program according to the second aspect of the present invention is an image processing method or a program which generates a plurality of synthetic images used for generation of a multi-viewpoint image and having disparity with respect to each other, on the basis of a plurality of captured images obtained by capturing with imaging means while moving the imaging means, and includes the steps of determining, for each of the synthetic images, strip regions in each of the captured images from which images used for generation of each of the synthetic images are extracted, generating each of the synthetic images by extracting the images in the strip regions from the captured images and synthesizing the images, and selecting several of the synthetic images on the basis of information indicating a viewing environment of the multi-viewpoint image, and generating the multi-viewpoint image, in which a subject whose disparity varies with a viewpoint position of a user is displayed stereoscopically, by using the selected synthetic images.

In the second aspect of the present invention, in image processing which generates a plurality of synthetic images used for generation of a multi-viewpoint image and having disparity with respect to each other, on the basis of a plurality of captured images obtained by capturing with imaging means while moving the imaging means, for each of the synthetic images, strip regions in each of the captured images, from which images used for generation of each of the synthetic images are extracted, are determined, each of the synthetic images is generated by extracting the images in the strip regions from the captured images and synthesizing the images, several of the synthetic images are selected on the basis of information indicating a viewing environment of the multi-viewpoint image, and the multi-viewpoint image, in which a subject whose disparity varies with a viewpoint position of a user is displayed stereoscopically, is generated by using the selected synthetic images.

Advantageous Effects of Invention

According to the first aspect of the present invention, a multi-viewpoint image having more appropriate disparity that suits the viewing environment can be obtained.

Also, according to the second aspect of the present invention, a multi-viewpoint image having more appropriate disparity that suits the viewing environment can be obtained. Brief Description of Drawings

[Fig. 1] Fig. 1 is a diagram for explaining about panoramic images.
[Fig. 2] Fig. 2 is a diagram for explaining about a multi-viewpoint image.
[Fig. 3] Fig. 3 is a diagram showing an example of the configuration of an embodiment of an imaging apparatus to which the present invention is applied.
[Fig. 4] Fig. 4 is a flowchart for explaining a multi-viewpoint image display process.
[Fig. 5] Fig. 5 is a diagram for explaining about strip regions.
[Fig. 6] Fig. 6 is a diagram for explaining about detection of a dominant disparity.
[Fig. 7] Fig. 7 is a diagram for explaining about detection of a dominant disparity.
[Fig. 8] Fig. 8 is a diagram for explaining about detection of a dominant disparity.
[Fig. 9] Fig. 9 is a diagram for explaining about detection of a dominant disparity.
[Fig. 10] Fig. 10 is a diagram for explaining about generation of a multi-viewpoint image.
[Fig. 11] Fig. 11 is a diagram showing another example of the configuration of an imaging apparatus to which the present invention is applied.
[Fig. 12] Fig. 12 is a flowchart for explaining a multi-viewpoint image display process.
[Fig. 13] Fig. 13 is a diagram for explaining about generation of a multi-viewpoint image.
[Fig. 14] Fig. 14 is a diagram for explaining about the relationship between the amount of offset and disparity.
[Fig. 15] Fig. 15 is a diagram showing an example of the configuration of a computer.

Description of Embodiments

Hereinbelow, embodiments to which the present invention is applied will be described with reference to the drawings.

<First Embodiment>

[Explanation of Multi-viewpoint Image]

An imaging apparatus to which the present invention is applied is formed by, for example, a camera. A multi-viewpoint image is generated from a plurality of captured images that are successively captured by the imaging apparatus in the state in which the imaging apparatus is moving. The multi-viewpoint image is made up of a plurality of panoramic images having disparity with respect to each other.

When the user wishes to have a multi-viewpoint image generated by the imaging apparatus, the user operates the imaging apparatus so as to capture captured images that are used for generation of the multi-viewpoint image.

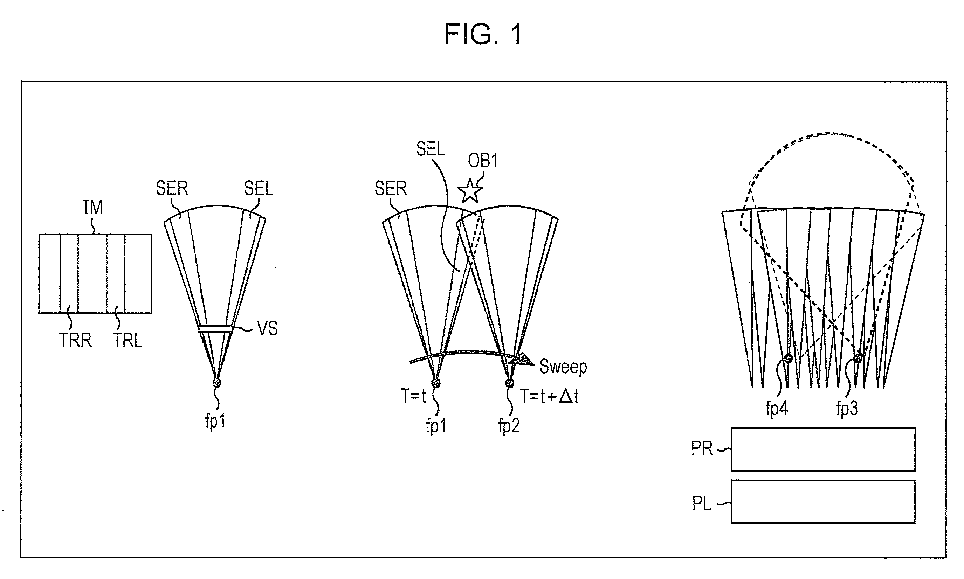

For example, as shown at the left side in Fig. 1, when a virtual imaging surface VS is captured in the state in which the lens principal point of the imaging apparatus is at a position fp1, a captured image IM is obtained. For example, subjects that exist in a region SER and a region SEL in the real space are respectively displayed in a region TRR and a region TRL in the captured image IM.

Then, when the user causes the imaging apparatus to capture a plurality of captured images while moving the imaging apparatus sideways in Fig. 1, the resulting captured images have disparity. Specifically, as shown at the middle of Fig. 1, when a captured image is captured in the state in which the lens principal point is at the position fp1 at time T=t, and a captured image is captured in the state in which the lens principal point is at a position fp2 at time T=t+Δt, the same subject OB1 is displayed in those captured images. At this time, disparity is produced since the subject OB1 is captured from different positions. By exploiting this, panoramic images in which the same subject is displayed and which have disparity with respect to each other are obtained.

That is, when regions corresponding to the region TRR and the region TRL of the captured image IM are extracted from each of the captured images obtained by capturing with the imaging apparatus while moving the imaging apparatus, and synthesized together, as shown at the right side in Fig. 1, a panoramic image PR and a panoramic image PL are obtained.

Here, the panoramic image PR is an image obtained by arranging and synthesizing regions of the captured images corresponding to the region TRR. This panoramic image PR is an image obtained by capturing the subject with a position fp3 as the position of a virtual lens principal point. On the other hand, the panoramic image PL is an image obtained by arranging and synthesizing regions of the captured images corresponding to the region TRL. This panoramic image PL is an image obtained by capturing the subject with a position fp4 as the position of a virtual lens principal point. Further, the panoramic image PR and the panoramic image PL are images that have disparity with respect to each other and in which the same subject is displayed.

Accordingly, with the panoramic image PR as the image for the right eye, and the panoramic image PL as the image for the left eye, when the panoramic images are displayed simultaneously by the lenticular scheme, a panoramic image that is stereoscopic appears to the eyes of the user.

In this way, when predetermined regions (hereinafter, referred to as strip regions) in a plurality of captured images are extracted, and those partial images are arranged and synthesized together into a single image, a single panoramic image is obtained. Also, when the strip regions are displaced to generate a different panoramic image, a pair of panoramic images having disparity with respect to each other can be obtained. By using those panoramic images, the subject can be displayed stereoscopically.

Likewise, if three or more strip regions are extracted from the captured images, and images in those strip regions are synthesized, a plurality of panoramic images whose viewpoints differ from each other can be obtained. Then, if those plurality of panoramic images are displayed simultaneously by the lenticular scheme, the same subject is displayed with different disparities depending on the viewpoint of the user. That is, a multi-viewpoint image is displayed.

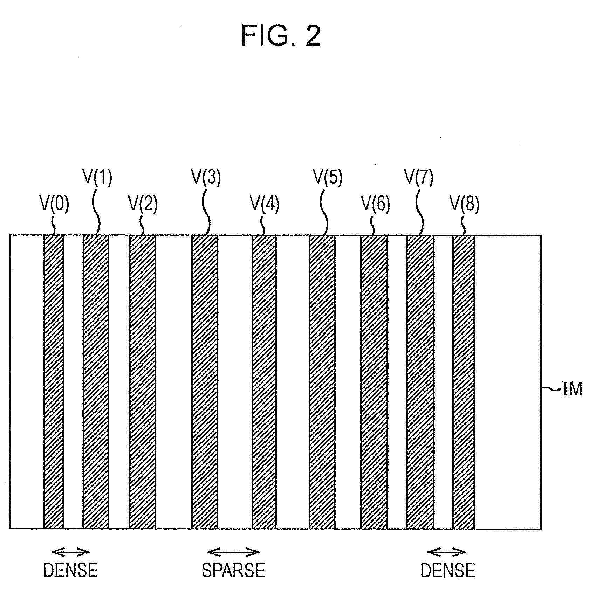

In the case where such a multi-viewpoint image is generated, for example, as shown in Fig. 2, in each captured image IM, a plurality of strip regions that differ from each other are set, and images extracted from those strip regions are synthesized to thereby generate a plurality of panoramic images.

In the example in Fig. 2, nine different strip regions V(0) to V(8) are set in the captured image IM in order from the left side to the right side in the drawing. The arrangement of the strip regions in the captured image IM is such that the strip regions become sparser toward the region at the middle of the captured image IM, and denser in the region closer to the edge of the captured image IM.

The position of each of these strip regions is set by an amount of offset indicating the distance from the strip region V(0) that serves as a reference. For example, if the amount of offset of the strip region V(1) is OF1, the position of the strip region V(1) is set so that the distance from the strip region V(0) to the strip region V(1) becomes OF1.

When a plurality of strip regions are set in this way, images in the strip regions V(0) to V(8) are extracted from a plurality of captured images IM that have been successively captured, and are synthesized together to generate panoramic images PV(0) to PV(8). For example, each of strip regions V(0) is extracted from each of the plurality of captured images IM and synthesized together to generate the panoramic image PV(0). Then, a plurality of sets of panoramic images obtained are used for a multi-viewpoint image.

[Configuration of Imaging Apparatus]

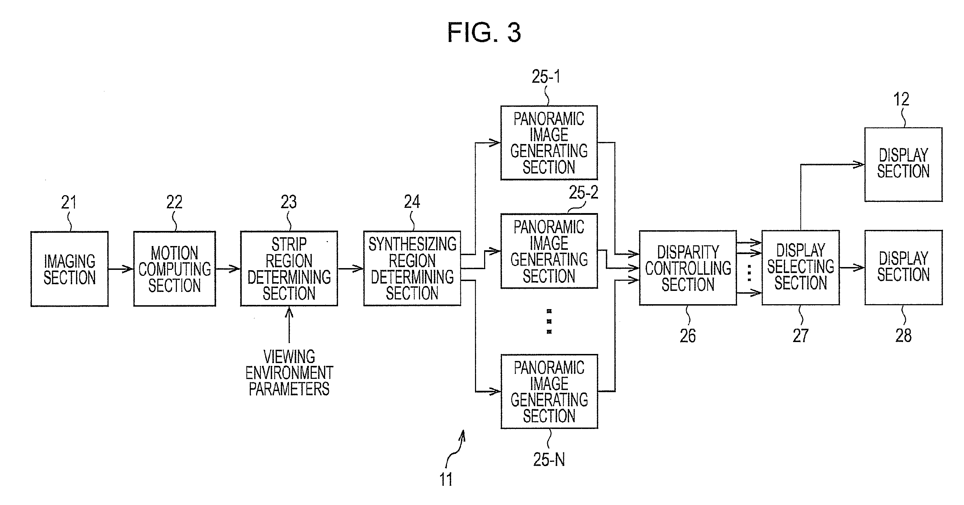

Fig. 3 is a diagram showing an example of the configuration of an embodiment of an imaging apparatus to which the present invention is applied.

An imaging apparatus 11 successively captures a subject, and generates a multi-viewpoint image from the obtained captured images. The imaging apparatus 11 displays the generated multi-viewpoint image on a display section provided in the imaging apparatus 11 itself, or on a display section 12 that is connected to the imaging apparatus 11.

The display section 12 is, for example, a naked-eye 3D display for multi-viewpoint display that is formed by a Liquid Crystal Display (LCD) or a lenticular lens. The display section 12 stereoscopically displays the multi-viewpoint image from the imaging apparatus 11.

The imaging apparatus 11 includes an imaging section 21, a motion computing section 22, a strip region determining section 23, a synthesizing region determining section 24, panoramic image generating sections 25-1 to 25-N, a disparity controlling section 26, a display selecting section 27, and a display section 28.

The imaging section 21 is formed by an optical system such an optical lens, an imaging device, and the like. The imaging section 21 captures the image of a subject by converting light from the subject into an electrical signal, and supplies the captured image obtained as a result to the motion computing section 22.

For example, when the user instructs successive capturing of captured images while moving the imaging apparatus 11 in a predetermined direction, captured images successively captured in time are sequentially supplied from the imaging section 21 to the motion computing section 22. It should be noted that in the following, of the captured images successively captured, the m-th captured image will be referred to as the captured image of Frame m.

The motion computing section 22 computes, on the basis of the captured images supplied from the imaging section 21, motion compensation parameters for compensating for the motion (movement) of the imaging apparatus 11 between frames of the captured images, and supplies the captured images and the motion compensation parameters to the strip region determining section 23.

The motion compensation parameters represent information indicating the relative positional relation between captured images, in the case when a plurality of captured images are arranged individually in the real space in such a way that the same subjects with no motion substantially overlap.

For example, consider a two-dimensional plane defined by a x direction and a y direction that are orthogonal to each other (hereinafter, referred to as projection plane), the x direction being the direction corresponding to the direction in which the user moves the imaging apparatus 11 when capturing captured images. Also, assume that the edges of each captured image are substantially parallel to the x direction and the y direction. In this case, as a motion compensation parameter, the motion computing section 22 computes information indicating the relative positional relation between two adjacent captured images, that is, between the captured images of successive frames when individual captured images are arranged on the projection plane.

It should be noted that in the following, of directions parallel to the x direction, the same direction as the direction of movement of the imaging apparatus 11 will be specifically referred to also as +x direction, and the direction opposite to the +x direction will be referred to also as -x direction. Therefore, when the captured images of individual frames are arranged on the projection plane, the captured image of Frame m is located on the +x direction side with respect to the captured image of Frame (m-1).

The strip region determining section 23 determines strip regions, which are regions in captured images to be extracted for generating panoramic images, on the basis of the captured images and the motion compensation parameters supplied from the motion computing section 22, and inputted viewing environment parameters.

Here, the viewing environment parameters represent information specifying the environment in which the user views a multi-viewpoint image. For example, the viewing environment parameters include information such as the size of the display screen of a display apparatus on which the multi-viewpoint image is displayed (hereinafter, referred to as screen size), the distance from the display screen to the user (hereinafter, also referred to as viewing distance), and the number of viewpoints of the multi-viewpoint image.

It should be noted that the size and viewing distance of the display screen, the number of viewpoints of the multi-viewpoint image, and so on may be inputted by the user, or may be specified by the imaging apparatus 11. For example, when the display destination for a multi-viewpoint image is designated, the imaging apparatus 11 specifies the screen size or the number of viewpoints from the display apparatus that serves as the display destination, or acquires the viewing distance from an unillustrated sensor that detects the distance from the display screen to the user.

The strip region determining section 23 sets the number of strip regions, and the amount of offset of each individual strip region on the basis of the inputted viewing environment parameters, and determines the strip regions in individual captured images. Upon determining the strip regions in the individual captured images, the strip region determining section 23 supplies the captured images, the motion compensation parameters, and strip region position information indicating the positions of the strip regions, to the synthesizing region determining section 24.

The synthesizing region determining section 24 determines a synthesizing region on the basis of the captured images, the motion compensation parameters, and the strip region position information supplied from the strip region determining section 23.

In the imaging apparatus 11, strip regions in individual captured images are extracted and synthesized to generate a single panoramic image. Even when the user captures captured images while moving the imaging apparatus 11 in the x direction, the imaging apparatus 11 slightly moves also in the y direction. Consequently, when the captured images are arranged on the projection plane, there are variations in the positions of the captured images with respect to the y direction.

Accordingly, the synthesizing region determining section 24 determines the largest rectangular region inscribed in the region made up of the strip regions of individual captured images when the captured images are arranged on the projection plane, as the synthesizing region from which images used for generation of each panoramic image are extracted. Therefore, when regions included within the synthesizing region are extracted from the strip regions of the individual captured images and synthesized, a panoramic image having a rectangular shape is obtained.

The synthesizing region determining section 24 supplies the determined synthesizing region, that is, synthesizing region information indicating the final corrected positions of the individual strip regions, the captured images, and the motion compensation parameters to the panoramic image generating sections 25-1 to 25-N.

The panoramic image generating sections 25-1 to 25-N respectively generates the panoramic images PV(0) to PV(N-1) by using the synthesizing region information, the captured images, and the motion compensation parameters supplied from the synthesizing region determining section 24, and supplies the panoramic images to the disparity controlling section 26.

It should be noted that more specifically, for example, in the case where the number of strip regions is set as four, and four panoramic images are to be generated, the panoramic images PV(0) to PV(3) are generated by the panoramic image generating sections 25-1 to 25-4. Then, in the panoramic image generating sections 25-5 to 25-N, generation of panoramic images is not performed.

It should be noted that in the following, where it is not particularly necessary to distinguish between the panoramic image generating sections 25-1 to 25-N, the panoramic image generating sections 25-1 to 25-N will be also referred to as panoramic image generating section 25.

The disparity controlling section 26 manipulates the panoramic images supplied from the panoramic image generating section 25 to perform disparity adjustment of the panoramic images, and supplies the panoramic images obtained as a result to the display selecting section 27.

The display selecting section 27 generates a multi-viewpoint image on the basis of the panoramic images supplied from the display controlling section 26, and supplies the multi-viewpoint image to the display section 12 or the display section 28. The display section 28 is, for example, a naked-eye 3D display for multi-viewpoint display that is formed by an LCD or a lenticular lens. Also, for example, the display section 28 is a compact display apparatus with a small screen size in comparison to the display section 12.

[Explanation of Multi-viewpoint Image Display Process]

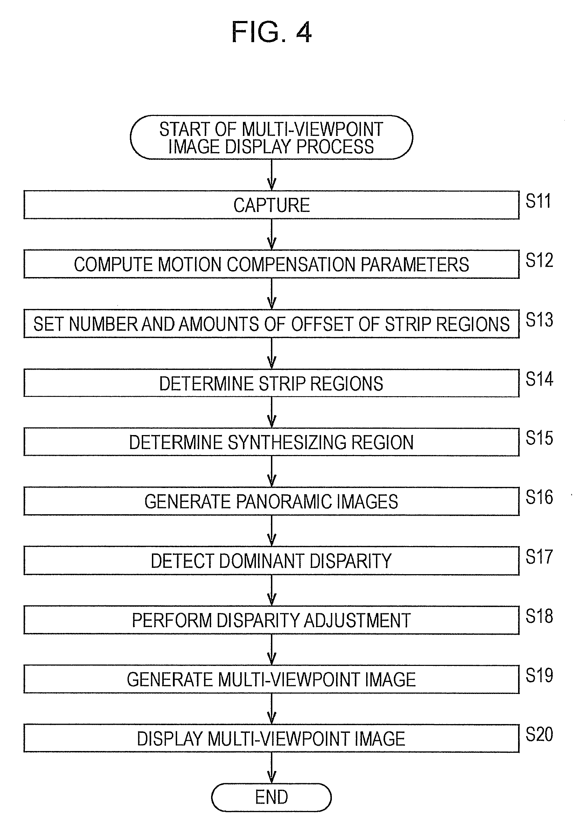

Incidentally, when the user operates the imaging apparatus 11 to instruct generation of a multi-viewpoint image, the imaging apparatus 11 starts a multi-viewpoint image display process, which is a process for generating and displaying a multi-viewpoint image. Hereinbelow, the multi-viewpoint image display process by the imaging apparatus 11 will be described with reference to the flowchart in Fig. 4.

In step S11, the imaging section 21 captures a subject in the state in which the imaging apparatus 11 is moving. For example, the user causes the imaging apparatus 11 to capture a plurality of captured images successively while turning the imaging apparatus 11 in a predetermined direction.

Since light from the subject is incident on the imaging section 21, the imaging section 21 performs photoelectric conversion on the incident light to thereby capture captured images. The obtained captured images are sequentially supplied from the imaging section 21 to the motion computing section 22. It should be noted that each captured image may be a single still image that has been captured, or may be one frame's worth of image that makes up a moving image that has been shot.

In step S12, for each individual captured image supplied from the imaging section 21, the motion computing section 22 computes a motion compensation parameter for the captured image, and supplies the captured images and the motion compensation parameters to the strip region determining section 23.

For example, the motion computing section 22 uses the captured images of two successive frames to compute a global motion vector for each captured image by block matching, as the motion compensation parameter.

That is, the motion computing section 22 splits the captured image of a target frame into a plurality of blocks, and for each of the blocks, performs block matching with the captured image of the frame immediately preceding the target, thereby detecting a motion vector for the block. Then, among the motion vectors determined for each block, the motion vector with the maximum occurrence in terms of magnitude and direction is determined as the global motion vector for the captured image.

A global motion vector is a global motion vector indicating the motion between frames of the entire subject in captured images. Since many of subjects in captured images are stationary objects with no motion in the real space, it can be said that a global motion vector is a vector indicating the motion between frames of a stationary object in captured images, that is, the motion of the imaging apparatus 11 when capturing the captured images.

It should be noted that the motion compensation parameter may alternatively be determined by using an extended affine transformation or the like. For example, in the case of computing the motion compensation parameter by using an extended affine transformation, the motion computing section 22 determines a vector (V, W) indicating the motion between frames of captured images by calculating Equation (1) below, and sets the obtained vector (V, W) as the motion compensation parameter.

[Eq. 1]

$$\begin{bmatrix} V \\ W \end{bmatrix} = \begin{bmatrix} a & b & c & d & e & f \\ g & h & i & j & k & l \end{bmatrix} \begin{bmatrix} x^2 \\ xy \\ y^2 \\ x \\ y \\ 1 \end{bmatrix} = \begin{bmatrix} ax^2 + bxy + cy^2 + dx + ey + f \\ gx^2 + hxy + iy^2 + jx + ky + l \end{bmatrix} \qquad \cdots (1)$$

It should be noted that in Equation (1), a to 1 each denote an affine parameter, and x and y respectively denote the x component and y component at the center position of a characteristic block in a captured image on the xycoordinate system.

That is, the motion computing section 22 splits the captured image of a target frame into a plurality of blocks, and for each of the blocks, performs block matching with the captured image of the frame immediately preceding the target, thereby detecting a motion vector for the block. Then, by using a corner detector or the like, the motion computing section 22 determines the reliabilities of the motion vectors of individual blocks, chooses the block with the most reliable motion vector as a characteristic block, and calculates Equation (1) described above.

It should be noted that the affine parameter is computed by the least square method by using the center coordinates of each block, and the motion vector of each block.

In step S13, on the basis of the inputted viewing environment parameters, the strip region determining section 23 sets the number of strip regions, and the amount of offset of each individual strip region.

Specifically, the strip region determining section 23 sets the number of viewpoints of the multi-viewpoint image indicated by the viewpoint environment parameters, as the number of strip regions to be generated.

Also, the strip region determining section 23 holds in advance an offset table in which the screen size of a display section on which the multi-viewpoint image is displayed, and the viewing distance are associated with the amount of offset of each individual strip region.

For example, provided that a specified amount of offset is set with respect to a predetermined screen size, when the screen size becomes N times, the amount of offset is set to 1/N times the amount of offset. This is because if the viewing distance is the same, the disparity of a multi-viewpoint image as viewed from the user becomes greater as the screen size becomes larger. That is, by making the amount of offset smaller as the disparity increases with the screen size, the disparity of the multi-viewpoint image is adjusted so as to become smaller, thereby obtaining a multi-viewpoint image having more appropriate disparity.

Also, for example, provided that a specified amount of offset is set with respect to a predetermined viewing distance, when the viewing distance becomes N times, the amount of offset is set to become N times the amount of offset. This is because if the screen size is the same, the disparity of a multi-viewpoint image as viewed from the user becomes smaller as the viewing distance becomes longer.

The strip region determining section 23 references the offset table, and sets a value determined by the screen size and the viewing distance indicated by the viewing environment parameters, as the amount of offset of each individual strip region. That is, on the basis of the viewing environment parameters, the positional relation between the individual strip regions in each captured image are set.

Also, if the positional relation between the individual strip regions determined by the amount of offset is set such that the distance between adjacent strip regions becomes shorter for strip regions located closer to the edge of the captured image IM, the influence of pseudoscopic vision can be reduced when a multi-viewpoint image is displayed.

For example, consider a case in which, by using panoramic images generated from the strip regions in Fig. 2, a multi-viewpoint image with nine viewpoints is generated, and displayed on the display section 28. In this case, suppose that when the viewpoint of the user is located at a predetermined distance from the display screen of the display section 28 and at substantially the middle of the display screen, the panoramic image PV(3) and the panoramic image PV(5) appear to the right eye and left eye of the user. Then, suppose that when the user moves the viewpoint toward the edge of the display screen, the panoramic image PV(7) and the panoramic image PV(8) appear to the right eye and left eye of the user.

When the user further moves the viewpoint toward the edge of the display screen in this state, the panoramic image PV(8) and the panoramic image PV(0) appear to the right eye and left eye of the user, and so-called pseudoscopic vision occurs. When such pseudoscopic vision occurs, the user is sometimes unable to grasp projections and depressions of the subject well, causing fatigue of the eyes and brain of the user.

At this time, if the disparity of the panoramic image PV(8) and the panoramic image PV(0) is small, the stereoscopic perception of the subject can be lessened, and thus fatigue of the eyes and brain of the user can be relieved. Therefore, to make the influence of this pseudoscopic vision smaller, the distance from the strip region V(0) to the strip region V(8) may be made shorter. However, if this distance is made shorter, the separation between the strip regions becomes narrower, making it impossible to obtain a multi-viewpoint image with stereoscopic perception.

Accordingly, by making the separation between strip regions narrower near the edge of captured images, and conversely making the separation between strip regions wider in the vicinity of the middle of the captured images, it is possible to relieve fatigue of the user due to pseudoscopic vision while preventing loss of stereoscopic perception of the multi-viewpoint image. That is, when the viewpoint of the user is located in the vicinity of the middle of the display screen where pseudoscopic vision does not occur, images with greater disparity are displayed, thereby making it possible to obtain a multi-viewpoint image that provides more stereoscopic perception.

When the number and amounts of offset of strip regions are set by the strip region determining section 23, the processing proceeds from step S13 to step S14.

In step S14, the strip region determining section 23 determines strip regions in individual captured images, on the basis of the captured images and the motion compensation parameters supplied from the motion computing section 22, and the number and amounts of offset of strip regions that have been set.

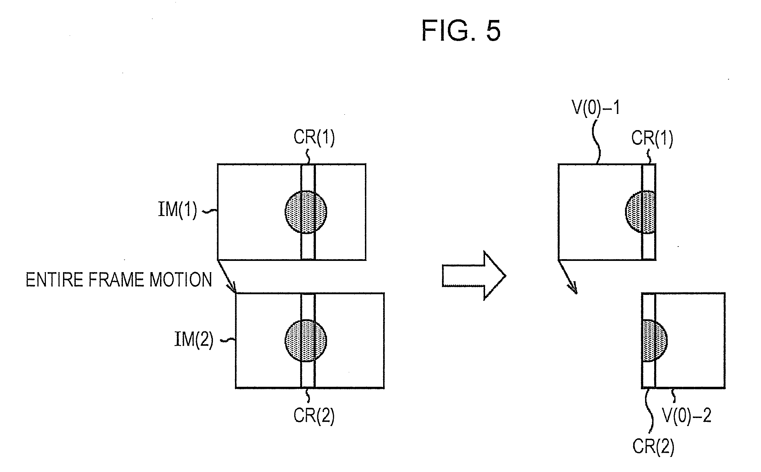

For example, as shown at the left side in Fig. 5, the strip region determining section 23 arranges the captured image IM(1) of Frame 1 and the captured image IM(2) of Frame 2 on the projection plane on the basis of the motion compensation parameter. It should be noted that in Fig. 5, in the drawing, the horizontal direction indicates the x direction and, in particular, the rightward direction indicates the +x direction. Also, in Fig. 5, for the ease of description, only the positional relation between captured images in the x direction is shown. In actuality, when the captured images are arranged on the projection plane, those captured images overlap each other.

The strip region determining section 23 sets the position of the center in the x direction of a region where the captured image IM(1) and the captured image IM(2) arranged on the projection plane overlap (hereinafter, referred to as reference position), and further sets as a V(0) reference position a position separated by a specific distance in the -x direction from the reference position.

In the captured image IM(1), the strip region determining section 23 sets a region centered at the V(0) reference position and having a predetermined width that is set in advance in the x direction, as an overlapping region CR(1). Also, in the captured image IM(2), the strip region determining section 23 sets a region centered at the V(0) reference position and having a predetermined width that is set in advance in the x direction, as an overlapping region CR(2). Here, the overlapping region CR(1) and the overlapping region CR(2) are regions that overlap each other on the projection plane (the same region).

Then, as shown at the right side in the drawing, the strip region determining section 23 sets, as a strip region V(0)-1 of the captured image of Frame 1, the region in the captured image IM(1) from the left edge of the captured image IM(1) to the right edge of the overlapping region CR(1). Likewise, the strip region determining section 23 sets, as a strip region V(0)-2 of the captured image of Frame 2, the region in the captured image IM(2) from the left edge of the overlapping region CR(2) to the right edge of the captured image IM(2).

It should be noted that more specifically, from Frame 2 onwards, in setting the strip region V(0) of a target frame, the frames preceding and following the frame need to be considered. Therefore, for example, the strip region V(0)-m of Frame m (where m≥2) is set as the region in the captured image from the left edge of the overlapping region with Frame (m-1) to the right edge of the overlapping region with Frame (m+1).

After setting the strip region V(0) in each frame in this way, the strip region determining section 23 performs similar processing to set the strip region V(n) (wherein 1≤n) in each frame. At this time, a position separated by a specific distance in the +x direction or -x direction is set as a V(n) reference position corresponding to the V(0) reference position. At this time, the distance from the V(0) reference position to the V(n) reference position is set to be equal to the amount of offset of the strip region V(n).

For example, the strip region determining section 23 sets, as the strip region V(n) of the captured image of Frame 1, the region in the captured image IM(1) from the left edge of the captured image IM(1) to the right edge of the overlapping region set with respect to the V(n) reference position.

In this way, by setting each individual strip region so that the distance from the V(0) reference position to the V(n) reference position becomes equal to the amount of offset, panoramic images having disparity with respect to each other are obtained.

Returning to description of the flowchart in Fig. 4, upon determining the strip regions, the strip region determining section 23 supplies the captured images, the motion compensation parameters, and strip region position information indicating the positions of the strip regions, to the synthesizing region determining section 24.

In step S15, the synthesizing region determining section 24 determines a synthesizing region on the basis of the captured images, the motion compensation parameters, and the strip region position information from the strip region determining section 23, and supplies synthesizing region information indicating the position of the determined synthesizing region, the captured images, and the motion compensation parameters to the panoramic image generating section 25. At this time, synthesizing region information for generating a panoramic image PV(n-1) is supplied to each panoramic image generating section 25-n (where 1≤n≤N).

In step S16, the panoramic image generating section 25 generates panoramic images by using the synthesizing region information, the captured images, and the motion compensation parameters from the synthesizing region determining section 24, and supplies the panoramic images to the disparity controlling section 26.

For example, by using the motion compensation parameters, the panoramic image generating section 25-1 arranges captured images on the projection plane in such a way that the same subjects with no motion substantially overlap. Then, the panoramic image generating section 25-1 extracts images within the final strip region V(0) of the individual captured images which is indicated by the synthesizing region information, and synthesizes the extracted images to thereby generate the panoramic image PV(0).

In this way, when the process in step S16 is performed by the panoramic image generating section 25, a plurality of panoramic images in which a subject viewed from different viewpoints is displayed are obtained. While the same subject is displayed in these panoramic images, this subject has disparity. Consequently, if arbitrary two of these panoramic images are displayed simultaneously, the subject in the panoramic images appears stereoscopically to the user.

In step S17, the disparity controlling section 26 detects a dominant disparity in the panoramic images supplied from the panoramic image generating section 25.
That is, with the panoramic image PV(0) as a reference, the disparity controlling section 26 determines the dominant disparity between the panoramic image PV and another panoramic image.

Here, a dominant disparity refers to the disparity that the main subject in panoramic images, that is, the largest subject (having the widest area) has. The disparity controlling section 26 determines disparity for each pixel in the panoramic images, and generates an evaluation value table including the magnitudes of individual disparities, and evaluation values indicating the numbers of pixels in the panoramic images which have the corresponding magnitudes of disparities, thereby determining the dominant disparity.

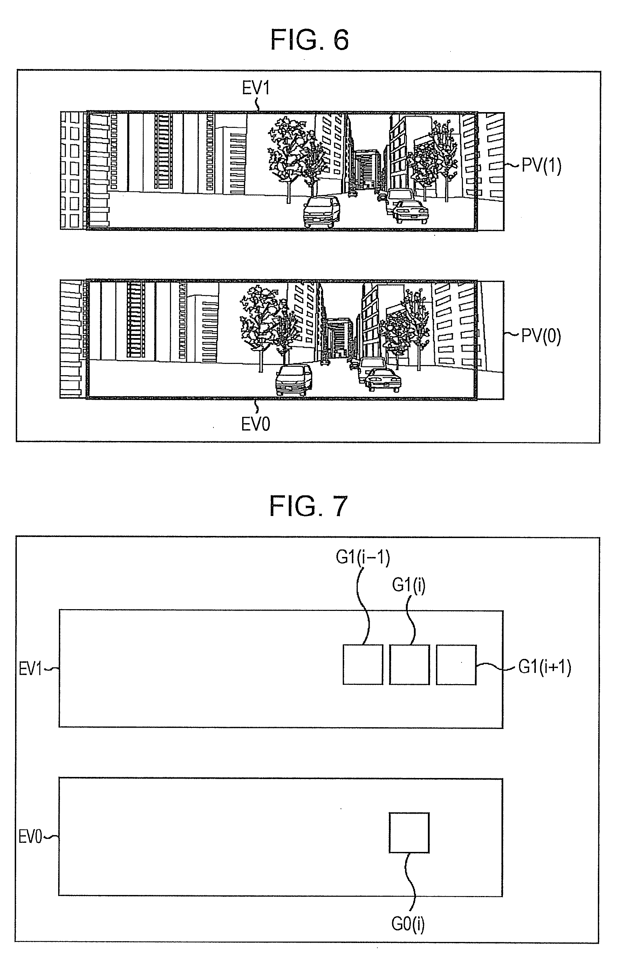

Specifically, as shown in Fig. 6, the disparity controlling section 26 selects the panoramic image PV(0) and another panoramic image. For example, in the example in Fig. 6, the panoramic image PV(0) and the panoramic image PV(1) are selected. It should be noted that in Fig. 6, the horizontal direction and the vertical direction indicate the x direction and the y direction, respectively. In particular, in the drawing, the rightward direction indicates the +x direction.

Also, the disparity controlling section 26 sets an evaluation target region EV0 and an evaluation target region EV1 respectively in the panoramic image PV(0) and the panoramic image PV(1).

The evaluation target region EV0 is a rectangular region whose center is located at the same position as the center of the panoramic image PV(0), and which is shorter than the panoramic image PV(0) by a predetermined length in the x direction. Likewise, the evaluation target region EV1 is a rectangular region whose center is located at the same position as the center of the panoramic image PV(1), and which is shorter than the panoramic image PV(1) by a predetermined length in the x direction. Also, the evaluation target region EV0 and the evaluation target region EV1 are regions of the same size. The disparity controlling section 26 sets pixels located within these evaluation target regions as targets among the pixels in the panoramic images, and determines evaluation values for the individual pixels.

First, the disparity controlling section 26 initializes evaluation values for individual disparities in the evaluation value table to "0", and determines the evaluation value for the disparity "0". That is, as shown in Fig. 7, the disparity controlling section 26 sets a predetermined pixel G0(i) within the evaluation target region EV0 in the panoramic image PV(0), and a predetermined pixel G1(i) within the evaluation target region EV1 in the panoramic image PV(1), as target pixels. It should be noted that the pixel G0(i) and the pixel G1(i) are pixels that are located at the same position when the panoramic image PV(0) and the panoramic image PV(1) are overlaid on top of each other.

Next, the disparity controlling section 26 sets a threshold th by using a pixel G1(i+1) and a pixel G1(i-1) that are adjacent to the pixel G1(i) in the panoramic image PV(1) in the x direction, and the pixel G1(i). That is, the disparity controlling section 26 determines the dynamic range DL in the x direction of the pixel G1(i), by determining the absolute value of the difference between the largest value and the smallest value among the respective pixel values of the pixel G1(i-1), the pixel G1(i), and the pixel G1(i+1).

If the determined dynamic range DL is equal to or larger than a predetermined value that is set in advance, the disparity controlling section 26 sets the threshold th to a specified value that is set in advance, and if the dynamic range DL is less than the predetermined value that is set in advance, the disparity controlling section 26 sets the threshold th to a value smaller than the specified value.

Then, the disparity controlling section 26 determines the absolute value of the difference between the pixel values of the pixel G0(i) and pixel G1(i), and if the determined absolute value is less than the threshold th, the disparity controlling section 26 adds "1" to the evaluation value for the disparity "0" in the evaluation value table. In contrast, if the determined absolute value is equal to or larger than the threshold th, the disparity controlling section 26 keeps the evaluation value for the disparity "0" as it is.

If the absolute value of the difference between the target pixel G0(i) and the pixel G1(i) is somewhat small, then the same subject should be displayed in those pixels. Also, since the pixel G0(i) and the pixel G1(i) are pixels that lie at the same position in the panoramic image PV(0) and the panoramic image PV(1), if the same subject is displayed in those pixels, it follows that the subject does not have disparity. That is, the subject displayed in the pixel G0(i) and the pixel G1(i) is localized on the display screen of the display section 28 or the like when the multi-viewpoint image is displayed.

It should be noted that the reason why the threshold th is varied in accordance with the dynamic range DL is to prevent erroneous judgment of the presence/absence of correlation between target pixels. For example, suppose that as a subject, a flat subject (for example, the sky or the like) with little variation in pixel value with respect to the spatial direction is displayed in the portion of the pixel G1(i).

In this case, the pixel values of pixels in the neighborhood of the pixel G1(i) are close to the pixel value of the pixel G1(i), and even if different portions of the subject are displayed in the pixel G0(i) and the pixel G1(i), the absolute value of the difference between those pixels may become less than the threshold th in some cases. That is, erroneous judgment may occur in some cases. Accordingly, when the dynamic range DL is small, the threshold th is set to a value smaller than the normal specified value so that such erroneous judgment becomes less likely to occur.

It should be noted that to prevent erroneous judgment, if the dynamic range DL is less than a predetermined value that is set in advance, the pixel G0(i) and the pixel G1(i) may not be set as targets, and calculation of their difference may not be performed.

In this way, when the difference between pixels set as targets is determined, and "1" is added to the evaluation value in the evaluation value table in accordance with the result of threshold processing with the threshold th, the disparity controlling section 26 selects pixels within the evaluation target region EV0 and the evaluation target region EV1 which have not been set as targets yet, and sets the pixels as targets. That is, the absolute value of the difference between the pixels newly set as targets, and the threshold th are compared with each other, and in accordance with the result of the comparison, the evaluation value table is updated.

Then, when all of the pixels within the evaluation target region EV0 and the evaluation target region EV1 have been set as targets, the evaluation value for the disparity "0" in the evaluation value table at that time is regarded as the final evaluation value. This evaluation value indicates the number of pixels in which a subject with the disparity "0" is displayed, within the evaluation target region in each panoramic image. In other words, within the evaluation target region in each panoramic image, pixels in which a subject with the disparity "0" is displayed exist as many as the number indicated by the evaluation value.

Further, while displacing the position of the panoramic image PV(0) with respect to the evaluation target region EV0, the disparity controlling section 26 determines evaluation values for individual magnitudes of disparities, by setting pixels located at the same position within the evaluation target region EV0 and the evaluation target region EV1 as targets. That is, while displacing the position of the panoramic image PV(0) with respect to the panoramic image PV(1), the disparity controlling section 26 determines the differences between the panoramic images, and determines evaluation values for individual disparities.

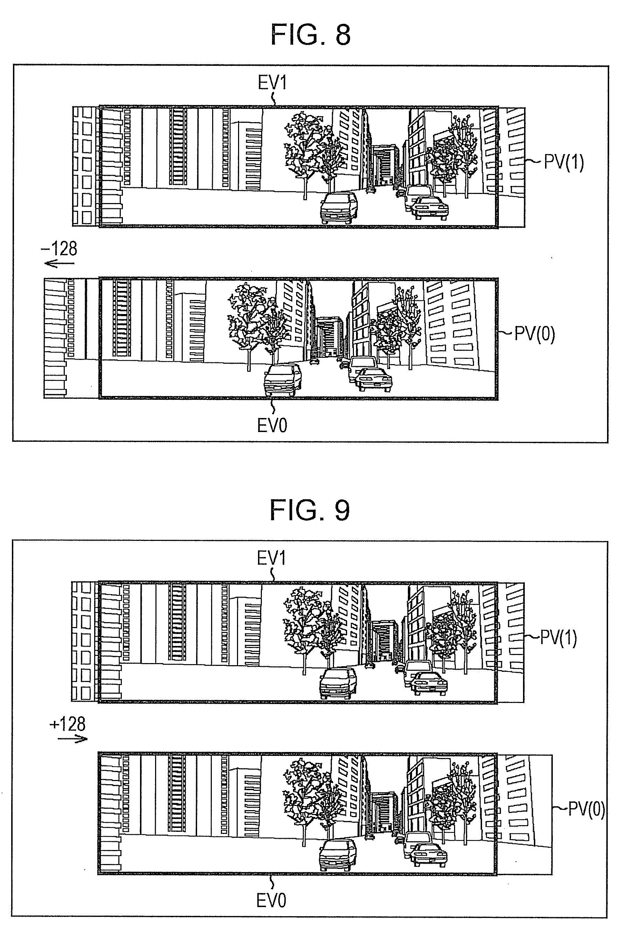

For example, as shown in Fig. 8, the disparity controlling section 26 displaces the position of the panoramic image PV(0) in the leftward direction in the drawing with respect to the evaluation target region EV0, and determines differences for the pixels within the evaluation target region. It should be noted that in the drawing, the horizontal direction and the vertical direction respectively indicate the x direction and the y direction and, in particular, the rightward direction indicates the +x direction.

In the example in Fig. 8, the panoramic image PV(0) is displaced in the -x direction by 128 pixels with respect to the evaluation target region EV0, and the right-side edges of the evaluation target region EV0 and panoramic image PV(0) are aligned with each other. In this state, the disparity controlling section 26 performs the processing described above with reference to Fig. 6 and Fig. 7. That is, the disparity controlling section 26 determines the absolute value of the difference between pixels in the panoramic image PV(0) and the panoramic image PV(1) which are located at the same position within the evaluation target region, and compares the absolute value with the threshold th. If the absolute value is less than the threshold as a result of the comparison, the disparity controlling section 26 adds "1" to the evaluation value for the disparity "-128" in the evaluation value table, and if the absolute value is equal to or larger than the threshold, the disparity controlling section 26 does not update the evaluation value.

When the evaluation value table is updated by setting all of pixels within the evaluation target region as targets in this way, the final evaluation value for the disparity "-128" is obtained. At the time of updating the evaluation value for the disparity "-128", this process is performed by displacing the panoramic image PV(0) by 128 pixels. Thus, the subject displayed in pixels whose absolute value of difference is less than the threshold is displayed at positions that are separated by 128 pixels between the panoramic image PV(0) and the panoramic image PV(1). That is, the subject has a disparity equal to 128 pixels. Then, upon display of the multi-viewpoint image, the subject displayed in pixels whose disparity is "-128" is localized on the side behind the display screen of the display section 28 or the like as viewed from the user.

Likewise, while displacing the position of the panoramic image PV(0) with respect to the evaluation target region EV0 also in the direction opposite to that in the example in Fig. 8, the disparity controlling section 26 determines evaluation values for individual magnitudes of disparities, by setting pixels located at the same position within the evaluation target region EV0 and the evaluation target region EV1 as targets.

For example, as shown in Fig. 9, the disparity controlling section 26 displaces the position of the panoramic image PV(0) in the rightward direction in the drawing with respect to the evaluation target region EV0, and determines differences for the pixels within the evaluation target region. It should be noted that in the drawing, the horizontal direction and the vertical direction respectively indicate the x direction and the y direction and, in particular, the rightward direction indicates the +x direction.

In the example in Fig. 9, the panoramic image PV(0) is displaced in the +x direction by 128 pixels with respect to the evaluation target region EV0, and the left-side edges of the evaluation target region EV0 and panoramic image PV(0) are aligned with each other. In this state, the disparity controlling section 26 determines the absolute value of the difference between pixels in the panoramic image PV(0) and the panoramic image PV(1) which are located at the same position within the evaluation target region, and compares the absolute value with the threshold th. If the absolute value is less than the threshold as a result of the comparison, the disparity controlling section 26 adds "1" to the evaluation value for the disparity "128" in the evaluation value table, and if the absolute value is equal to or larger than the threshold, the disparity controlling section 26 does not update the evaluation value.

When the evaluation value table is updated by setting all of pixels within the evaluation target region as targets in this way, the final evaluation value for the disparity "128" is obtained. Upon display of the multi-viewpoint image, the subject displayed in pixels whose disparity is "128" is localized on the side in front of the display screen of the display section 28 or the like as viewed from the user.

Upon determining evaluation values for the individual magnitudes of disparities in this way, the disparity controlling section 26 determines, as the dominant disparity between the panoramic image PV(0) and the panoramic image PV(1), the disparity with the largest evaluation value among the evaluation values in the evaluation value table. In the evaluation value table, the evaluation value for each disparity represents the number of pixels having the corresponding magnitude of disparity, that is, the size (area) of the region of the subject in the panoramic images. Therefore, it can be said that in the panoramic images, the region (pixels) having the disparity with the largest evaluation value is the widest in area, and the disparity with the maximum evaluation value is the dominant disparity for the subject in the panoramic images.

Also, for each of other panoramic images as well, the disparity controlling section 26 detects the dominant disparity between the corresponding panoramic image and the panoramic image PV(0).

It should be noted that as the method of determining the dominant disparity of panoramic images, while the description has been given of the case of determining the difference for each pixel in the panoramic images, it suffices to determine a correlation value indicating the degree of correlation between a region in the panoramic image PV(0) and a region in another panoramic image, and determine the evaluation value for each individual disparity on the basis of the correlation value. For example, a value based on not the difference for each individual pixel in the panoramic images but the difference for each individual block (for example, the sum of absolute differences between pixels within a block) may be used as the correlation value.

Also, when determining the dominant disparity by using the differences between the panoramic images, the panoramic image PV(0) and another panoramic image may be thinned out, and the differences between the thinned out and reduced panoramic images may be determined to determine the dominant disparity.

Returning to the flowchart in Fig. 4, when the disparity controlling section 26 detects the dominant disparity of the panoramic images, the processing proceeds from step S17 to step S18.

In step S18, the disparity controlling section 26 performs disparity adjustment of the panoramic images, on the basis of the determined dominant disparity between the panoramic images.

That is, the disparity controlling section 26 shifts (moves) the entire panoramic images by an amount equivalent to the disparity so that the determined dominant disparity is cancelled out. Specifically, supposing that Pa is obtained as the dominant disparity of the panoramic image PV(0) and the panoramic image PV(1), by setting the amount of shift of the panoramic images S=Pa, the disparity controlling section 26 shifts the entire panoramic image PV(1) by S in the x direction.

For example, if the amount of shift S is a positive value (S>0), the entire panoramic image PV(1) is shifted by S in the +x direction with respect to the evaluation target region EV1. Then, the regions of the panoramic image PV(0) and panoramic image PV(1) which lie within the evaluation target region EV0 and the evaluation target region EV1 after the shift are used as the final panoramic image pair for generating a multi-viewpoint image.

If the dominant disparity Pa is a positive value, when the panoramic image PV(0) and the panoramic image PV(1) are displayed stereoscopically, the main subject is localized on the side in front of the display screen of the display section 28 or the like. Accordingly, by shifting the panoramic image PV(1) in such a way that the disparity becomes small, that is, so that the dominant disparity becomes "0", then the main subject in the shifted panoramic images is localized at the position of the display screen of the display section 28 or the like.

Conversely, if the amount of shift S is a negative value (S<0), the entire panoramic image PV(1) is shifted in the -x direction with respect to the evaluation target region EV1. That is, if the dominant disparity Pa is a negative value, the main subject in the panoramic images is localized on the side behind the display screen. Thus, by shifting the panoramic image PV(1) in such a way that the disparity becomes larger, the main subject can be localized at the display screen.

Likewise, for each of other panoramic images as well, with the panoramic image PV(0) as a reference, on the basis of the dominant disparity with respect to the panoramic image PV(0), the disparity controlling section 26 shifts the panoramic image by the amount of shift S determined by the dominant disparity, thereby performing disparity control.

If disparity control is performed with the panoramic image PV(0) as a reference in this way, even when, for example, panoramic images are displayed stereoscopically on the basis of the panoramic image PV(1) and the panoramic image PV(2), the main subject is localized at the display screen of the display section 28 or the like.

If the main subject in panoramic images, that is, a large subject is localized at the position of the display screen of the display section 28 or the like, the localized position and the focus position of the user's eyes coincide with each other, thereby eliminating fatigue of the eyes and brain of the user. Moreover, while the main subject in the panoramic images is localized at the position of the display screen, the portions of other subjects are localized on the side in front of or behind the display screen. Thus, panoramic images (multi-viewpoint image) are displayed in a sufficiently stereoscopic fashion, and the resulting multi-viewpoint image provides natural depth perception (stereoscopic perception).

In this way, by determining the dominant disparity of panoramic images, and performing disparity adjustment of the panoramic images so that the dominant disparity is cancelled out, panoramic images having more appropriate disparity can be obtained and, as a result, more natural stereoscopic perception can be recreated.

After adjusting the disparity of the panoramic images, the disparity controlling section 26 supplies the panoramic images obtained as a result to the display selecting section 27, and the processing proceeds to step S19.

In step S19, the display selecting section 27 generates a multi-viewpoint image on the basis of the panoramic images supplied from the disparity controlling section 26.

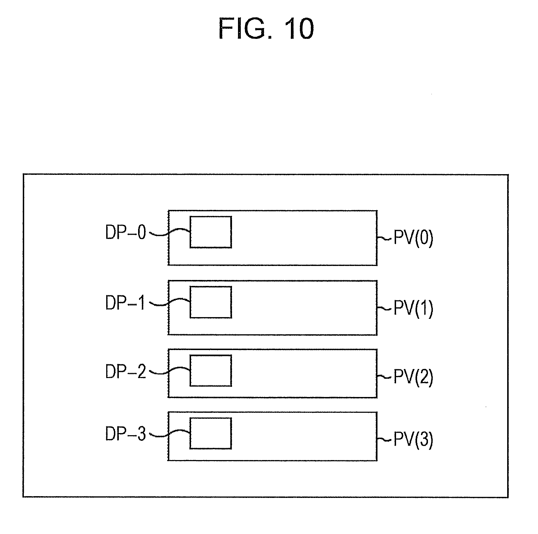

For example, as shown in Fig. 10, suppose that four panoramic images PV(0) to PV(3) are supplied to the display selecting section 27 from the disparity controlling section 26. At this time, the display selecting section 27 extracts respective display regions DP-0 to DP-3 of the same size, which are located at the same position in the respective panoramic images PV(0) to PV(3), as partial images B(0) to B(3), and uses an image made up of those four partial images as a multi-viewpoint image.

Specifically, the display selecting section 27 splits each of the extracted partial images B(0) to B(3) into several strip-like images (hereinafter, referred to as strip images TP(0) to TP(3)). Then, the display selecting section 27 uses, as a multi-viewpoint image, a single image obtained by repetitively arranging the strip regions one by one in the order of the strip images TP(0) to TP(3). That is, a total of four repetitively arranged sets of strip images arranged in the order of the strip images TP(0) to TP(3) are used as a multi-viewpoint image.

When this multi-viewpoint image is displayed by the lenticular scheme, among the plurality of partial images forming the multi-viewpoint image, lights from two partial images determined in accordance with the viewpoint position of the user are respectively introduced to the right eye and left eye of the user, and stereoscopic partial images are observed by the eyes of the user.

It should be noted that while it has been described that a region in a part of each panoramic image is set as a partial image to generate a multi-viewpoint image, each panoramic image may be set as a partial image as it is to generate a multi-viewpoint image.

Upon generating the multi-viewpoint image, the display selecting section 27 supplies the generated multi-viewpoint image to either the display section 12 or the display section 28, in accordance with an instruction from the imaging apparatus 11. At this time, the imaging apparatus 11 controls the display selecting section 27 so as to supply the multi-viewpoint image to the display section indicated by the viewing environment parameters, for example, the display destination designated by the user at the start of generation of the multi-viewpoint image.

In step S20, the display section 28 or the display section 12 displays the multi-viewpoint image supplied from the display selecting section 27, and the multi-viewpoint image display process ends.

In this way, the imaging apparatus 11 sets the number and amounts of offset of strip regions on the basis of the viewing environment parameters so that a multi-viewpoint image having the number of viewpoints and disparity that suit the viewing environment is obtained, and extracts images from the strip regions to generate panoramic images. Then, the imaging apparatus 11 performs disparity adjustment of the obtained panoramic images, generates a multi-viewpoint image from the disparity-adjusted panoramic images, and displays the multi-viewpoint image.

In this way, by setting the number and amounts of offset of strip regions on the basis of the viewing environment parameters, it is possible to obtain a multi-viewpoint image having more appropriate disparity that suits the viewing environment.

Also, with respect to the generated panoramic images, by determining the differences between pixels in the panoramic images, the dominant disparity of the panoramic images can be determined more easily and quickly. When the panoramic images are subjected to a shifting process so as to cancel out the disparity obtained in this way, a multi-viewpoint image having more appropriate disparity can be obtained. Therefore, when the obtained multi-viewpoint image is displayed, more natural stereoscopic perception can be recreated.

It should be noted that while it has been described above that disparity adjustment of panoramic images is performed on the basis of the dominant disparity of the panoramic images, it is also possible to use the determined dominant disparity to set the amounts of offset anew, and generate the final panoramic images anew from captured images. In this case, strip regions are set anew on the basis of the amounts of offset that have been set anew, and images in the strip regions are synthesized to generate the final panoramic images.

Also, while it has been described above that another panoramic image is shifted by the amount of shift S with the panoramic image PV(0) as a reference when adjusting the disparity of panoramic images, the panoramic image PV(0) may be shifted as well. In such a case, in accordance with the amount of shift determined for each individual panoramic image, the direction and amount of shift of each of the panoramic images including the panoramic image PV(0) are set.

Further, the size of display regions from which partial images used for generating a multi-viewpoint image are extracted may be determined by the screen size of the display section 28 or the like, the display magnification (enlarging magnification) of the display of a multi-viewpoint image by the user, and the like.

For example, in the case where a display magnification is designated by the user, information indicating the display magnification is also included in the viewing environment parameters. Then, the amount of offset is determined by the screen size, the viewing distance, and the display magnification indicated by the environment parameters.

<Second Embodiment>

[Configuration of Imaging Apparatus]

Further, while it has been described above that the number and amounts of offset of strip regions are set on the basis of the viewing environment parameters, it is also possible to generate panoramic images from preset number and amounts of offset of strip regions, and select panoramic images used for generation of a multi-viewpoint image from among those panoramic images.

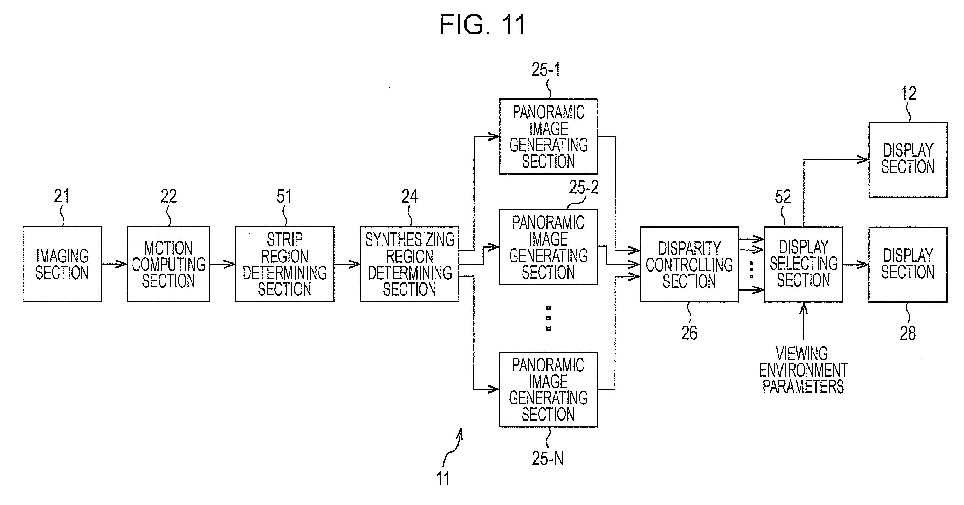

In such a case, the imaging apparatus 11 is configured as shown in Fig. 11. It should be noted that in Fig. 11, portions corresponding to those in the case in Fig. 3 are denoted by the same symbols, and description thereof is omitted. In the imaging apparatus 11 in Fig. 11, a strip region determining section 51 and a display selecting section 52 are provided instead of the strip region determining section 23 and the display selecting section 27 in Fig. 3.

The strip region determining section 51 determines a preset number of strip regions with preset amounts of offset, on the basis of the captured images and the motion compensation parameters supplied from the motion computing section 22, and supplies the captured images, the motion compensation parameters, and strip region position information to the synthesizing region determining section 24.

Also, the display selecting section 52 generates a multi-viewpoint image by using several of the plurality of panoramic images supplied from the disparity controlling section 26, on the basis of inputted viewing environment parameters, and supplies the multi-viewpoint image to the display section 12 or the display section 28.

[Explanation of Multi-viewpoint Image Display Process]

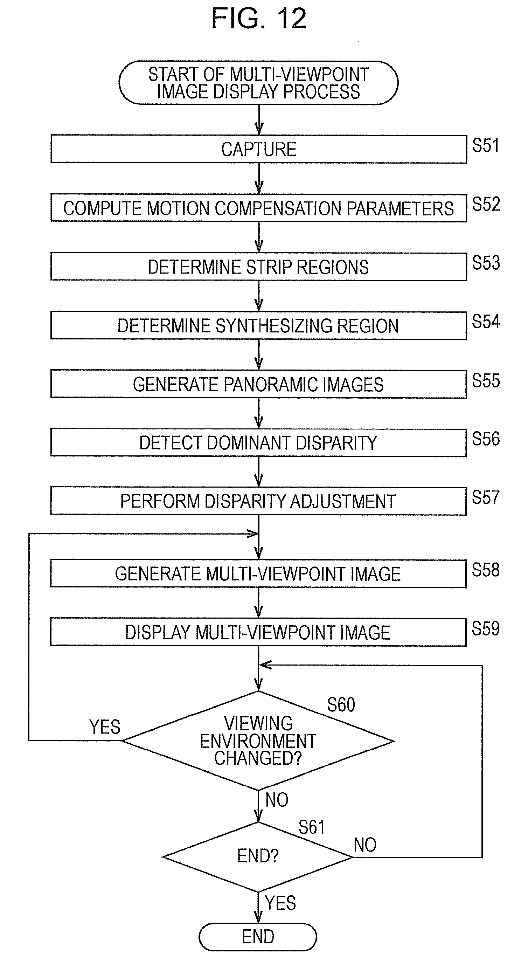

Next, referring to the flowchart in Fig. 12, a description will be given of a multi-viewpoint image display process performed by the imaging apparatus 11. It should be noted that since the processes in step S51 and step S52 are the same as the processes in step S11 and step S12 in Fig. 4, description thereof is omitted.

In step S53, the strip region determining section 51 determines a preset number of strip regions each with a preset amount of offset, on the basis of the captured images and the motion compensation parameters supplied from the motion computing section 22.

For example, the strip region determining section 51 determines preset N strip regions, with such an amount of offset that the separation between adjacent strip regions in each captured image (hereinafter, referred to as strip region separation) becomes 50 pixels. It should be noted that since the process of setting the positions of strip regions in each captured image is the same as the process described with reference to Fig. 5, description thereof is omitted.

Upon determining the strip regions, the strip region determining section 51 supplies the captured images, the motion compensation parameters, and strip region information to the synthesizing region determining section 24, and thereafter, the processes in step S54 to step S57 are performed. That is, images are extracted from the final strip regions to generate panoramic images, and disparity adjustment of the individual panoramic images is performed.

It should be noted that since these processes in step S54 to step S57 are the same as the processes in step S15 to step S18 in Fig. 4, description thereof is omitted.

In step S58, the display selecting section 52 generates a multi-viewpoint image from the panoramic images supplied from the disparity controlling section 26, on the basis of inputted viewing environment parameters.

Specifically, the display selecting section 52 holds in advance an offset separation table in which the screen size and viewing distance of a display section on which to display a multi-viewpoint image, and the separation in each captured image between strip regions for panoramic images that should be used for generation of the multi-viewpoint image (hereinafter, referred to as offset separation) are associated with each other. This offset separation is substantially a strip region separation, and indicates the positional relation in each captured image between strip regions for panoramic images that should be used for generation of the multi-viewpoint image, with respect to a designated viewing environment.

For example, in the case where the screen size is the size of a compact display section such as a mobile display, the offset separation is set to 100 pixels, and in the case where the screen size is the size of a display section such as a household television receiver which is larger than the mobile display, the offset separation is set to 50 pixels.

This is because if the viewing distance is the same, the larger the screen size, the greater the disparity of a multi-viewpoint image as viewed from the user. That is, by making the offset separation (amount of offset) smaller as the disparity increases with the screen size, the disparity of the multi-viewpoint image is adjusted so as to become smaller, thereby obtaining a multi-viewpoint image having more appropriate disparity.

The display selecting section 52 references the offset separation table, and sets the offset separation of the multi-viewpoint image to be generated, on the basis of the screen size and the viewing distance indicated by the viewing environment parameters. Then, from the number of viewpoints and offset separation of a multi-viewpoint image indicated by the viewing environment parameters, the display selecting section 52 selects panoramic images used for the generation, and generates a multi-viewpoint image from the selected panoramic images.

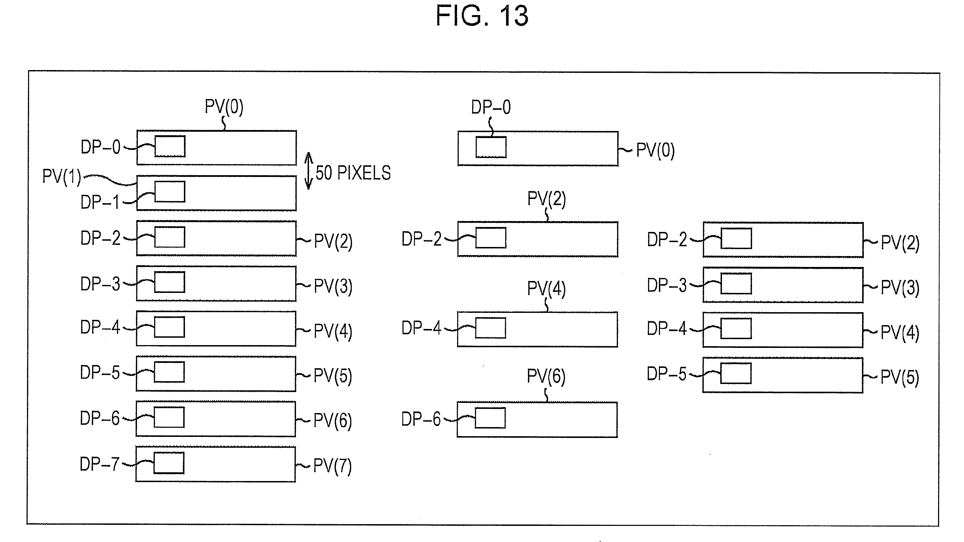

For example, as shown at the left side in Fig. 13, suppose that eight panoramic images PV(0) to PV(7) are supplied from the disparity controlling section 26, and the separation of strip regions of those panoramic images is 50 pixels. That is, suppose that eight panoramic images generated by setting the separation between adjacent strip regions in each captured image to 50 pixels are supplied.

It should be noted that in Fig. 13, display regions DP-0 to DP-7 in the panoramic images PV(0) to PV(7) are regions from which partial images are extracted when the corresponding panoramic images are used for generation of a multi-viewpoint image.

Now, suppose that from the offset separation table and the viewing environment parameters, the display selecting section 52 generates a multi-viewpoint image whose number of viewpoints is 4 and whose offset separation is 100 pixels. In this case, as shown at the middle in the drawing, the display selecting section 52 selects four panoramic images, the panoramic image PV(0), the panoramic image PV(2), the panoramic image PV(4), and the panoramic image PV(6), from the panoramic images PV(0) to PV(7).

Then, the display selecting section 52 extracts the display region DP-0, the display region DP-2, the display region DP-4, and the display region DP-6 in these selected panoramic images as partial images, and generates a multi-viewpoint image with four viewpoints.

Here, the panoramic image PV(0), the panoramic image PV(2), the panoramic image PV(4), and the panoramic image PV(6) are each a panoramic image generated from images in strip regions that are arranged with a separation of 100 pixels in each captured image. Therefore, this practically means that panoramic images are generated with such an amount of offset that the strip region separation becomes 100 pixels, and a multi-viewpoint image is generated from those panoramic images.

Also, for example, in the case of generating a multi-viewpoint image whose number of viewpoints is four and whose offset separation is 50 pixels, as shown at the right side in the drawing, the display selecting section 52 generates a multi-viewpoint image by using the panoramic images PV(2) to PV(5) among the panoramic images PV(0) to PV(7).

In this way, by selecting several of a plurality of panoramic images in accordance with the viewing environment, panoramic images having more appropriate disparity with respect to each other are obtained, and by using these panoramic images, a multi-viewpoint image having more appropriate disparity that suits the viewing environment can be obtained.

Upon generating the multi-viewpoint image, the display selecting section 52 supplies the generated multi-viewpoint image to the display section 12 or the display section 28. At this time, the display selecting section 52 supplies the multi-viewpoint image to the display destination indicated by the viewing environment parameters, for example, the display section designated by the user at the start of generation of the multi-viewpoint image.

In step S59, the display section 28 or the display section 12 displays the multi-viewpoint image supplied from the display selecting section 52.

In step S60, the display selecting section 52 judges whether or not the viewing environment has been changed. For example, when the imaging apparatus 11 is operated by the user, and the display destination for the multi-viewpoint image is switched from the display section 28 to the display section 12, the viewing environment parameters supplied to the display selecting section 52 change. When the supplied viewing environment parameters have changed, the display selecting section 52 judges that the viewing environment has been changed. It should be noted that other than the above, for example, the viewing environment parameters also change with a change in the viewing distance detected by an unillustrated sensor.

If it is judged in step S60 that the viewing environment has changed, the processing returns to step S58, and the above-described processing is repeated. That is, on the basis of newly supplied viewing environment parameters, a new multi-viewpoint image is generated and displayed.

It should be noted that the display magnification of the multi-viewpoint image, and the setting of stereoscopic perception strength for the multi-viewpoint image may be included in the viewing environment parameters, so that a multi-viewpoint image may be generated anew also when those display magnification and setting of stereoscopic perception strength have been changed. The display magnification is determined by the size of partial images, that is, the size of display regions where partial images are extracted from panoramic images.

For example, in the case when only the display magnification or the setting of stereoscopic perception strength in the viewing environment parameters has been changed, the display selecting section 52 increases or decreases the offset separation of the multi-viewpoint image as previously displayed, by a value (number of pixels) according to the change in the display magnification or the setting of stereoscopic perception strength. Then, the display selecting section 52 generates a new multi-viewpoint image from the newly set offset separation, and the same number of viewpoints as previously.

Specifically, suppose that the offset separation is set to 100 pixels, and a multi-viewpoint image whose display magnification is 1 has been generated and displayed from the panoramic image PV(0), the panoramic image PV(2), the panoramic image PV(4), and the panoramic image PV(6) in Fig. 13.

Then, suppose that in this state, the user has operated the imaging apparatus 11 to change the display magnification from "1" to "2". In this case, for example, the display selecting section 52 decreases the offset separation from 100 pixels to 50 pixels in accordance with the change in display magnification, and sets 50 pixels as the new offset separation. Then, from the number of viewpoints "4", and the new offset separation "50 pixels", the display selecting section 52 generates a multi-viewpoint image anew by using the panoramic images PV(2) to PV(5).

It should be noted that at this time, for example, a multi-viewpoint image is generated in such a way that the display region in each panoramic image from which a partial image is extracted is reduced to half the previous size, and the partial image extracted from the new display region is enlarged by two times. Thus, a new multi-viewpoint image, in which the subject is enlarged by two times as opposed to the multi-viewpoint image as previously displayed, is obtained.

Also, for example, when the setting of stereo perception strength is changed from normal to somewhat strong, the offset separation is increased by 100 pixels from the previous value, and when the setting of stereo perception strength is changed from normal to somewhat weak, the offset separation is decreased by 100 pixels from the previous value.

It should be noted that the display region may vary with the size of the display screen of a display section (for example, the display section 28 or the display section 12) on which a multi-viewpoint image is displayed. In such a case, the size of the display region from which each partial image is extracted is determined by the screen size indicated by the viewing environment parameters. Also, elements of the viewing environment parameters such as the viewing distance may be made variable by the user in accordance with the preference.

Further, if it is judged in step S60 that the viewing environment has not been changed, in step S61, the imaging apparatus 11 judges whether or not to end the processing. For example, it is judged to end the processing when the end of display of the multi-viewpoint image is instructed by the user.

If it is judged in step S61 not to end the processing, the processing returns to step S60, and the above-described processing is repeated.

On the other hand, if it is judged in step S61 to end the processing, each individual section in the imaging apparatus 11 ends the processing being performed, and the multi-viewpoint image display process ends.

In this way, the imaging apparatus 11 selects appropriate panoramic images from among a plurality of panoramic images in accordance with the viewing environment, and generates and displays a multi-viewpoint image from those selected panoramic images. In this way, by selecting panoramic images by setting the offset separation and the number of viewpoints on the basis of the viewing environment parameters, it is possible to obtain a multi-viewpoint image having more appropriate disparity that suits the viewing environment.

<Modification 1>

[Explanation of Dominant Disparity]

Incidentally, while it has been described above that the dominant disparity is determined from panoramic images, and disparity adjustment of the panoramic images is performed in accordance with the disparity, it has been confirmed by the present applicant that the absolute value of the dominant disparity of panoramic images is substantially equal to the amount of offset between strip regions.

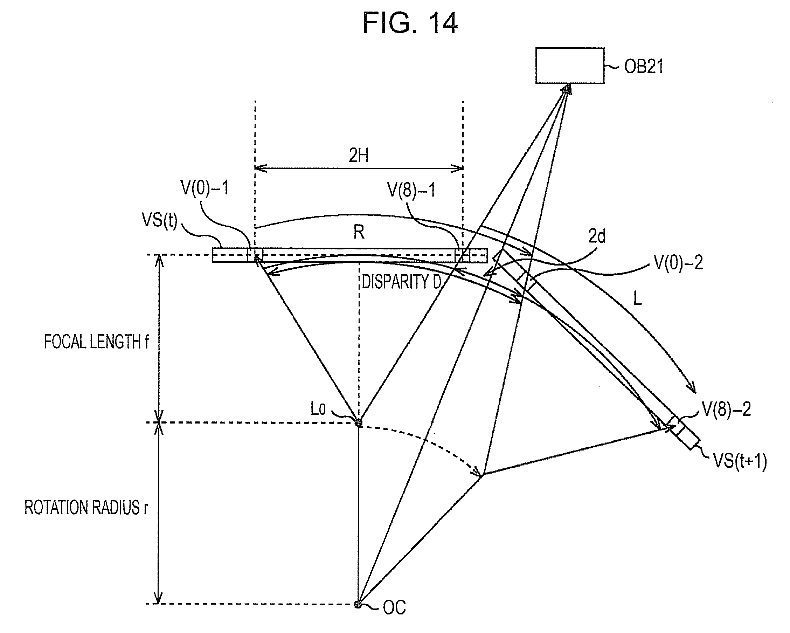

For example, suppose that as shown in Fig. 14, the user causes the imaging apparatus 11 to capture captured images while moving the imaging apparatus 11 in such a way that the principal point L0 of the lens forming the imaging section 21 turns in the clockwise direction in the drawing about a rotation center OC. Here, let the distance from the principal point L0 of the lens to the rotation center OC, that is, the rotation radius be r, and the focal length of the imaging section 21 be f.

Also, suppose that an imaging surface VS(t) and an imaging surface VS(t+1) are captured successively in time, a region V(0)-1 and a region V(8)-1 in the imaging surface VS(t) respectively correspond to the strip region V(0) and the strip region V(8), and a region V(0)-2 and a region V(8)-2 in the imaging surface VS(t+1) respectively correspond to the strip region V(0) and the strip region V(8). At this time, letting the amount of offset be 2H, the distance between the region V(0)-1 and the region V(8)-1, and the distance between the region V(0)-2 and the region V(8)-2 both equal to the amount of offset 2H.

In the example in Fig. 14, the same subject OB21 is displayed in the respective captured images corresponding to the imaging surface VS(t) and the imaging surface VS(t+1), and the subject OB21 is displayed in the respective regions corresponding to the region V(8)-1 and the region V(0)-2. The actual disparity of the subject OB21 in this case is the distance 2d between the region V(8)-1 and the region V(0)-2.

Also, when two panoramic images are generated by extracting the strip region V(0) and the strip region V(8) from the captured images captured in the example in Fig. 14, the disparity of those panoramic images is the distance D from the region V(0)-1 to the region V(0)-2. Then, while this disparity D can be represented by the sum of the distance from the region V(0)-1 to the region V(8)-1, that is, the amount of offset 2H, and the disparity 2d of the subject OB21, in the case when captured images are captured successively, the disparity 2d becomes an infinitesimal value, and is thus negligible. Therefore, the disparity D of the panoramic images can be approximated by the amount of offset 2H.

As described above, since the disparity D between the two panoramic images is substantially the same as the amount of offset 2H, when disparity adjustment of the panoramic images is performed on the basis of the amount of offset, appropriate disparity control can be performed even without determining the dominant disparity of the panoramic images.

In the case where the imaging apparatus 11 performs disparity adjustment of panoramic images on the basis of an amount of offset, the amount of offset is supplied to the disparity controlling section 26 in Fig. 3 and Fig. 11. Then, the process in each of step S17 and step S56 in Fig. 4 and Fig. 12 is not performed, and disparity adjustment of the panoramic images is performed on the basis of the amount of offset.

That is, when the amount of offset is inputted, the disparity controlling section 26 sets a value obtained by multiplying the amount of offset by "-1" as the amount of offset S, and performs disparity adjustment by shifting the entire target panoramic image by the amount of shift S in the x direction with respect to the panoramic image PV(0).

For example, suppose that the amounts of offset of the strip region V(1), strip region V(2), and strip region V(3) are 2H, 4H, and 6H, respectively, with reference to the strip region V(0). In this case, the disparity controlling section 26 sets the respective amounts of shift S of the panoramic images PV(1) to PV(3) as S=-2H, S=-4H, and S=-6H, respectively, and shifts the panoramic images PV(1) to PV(3) by those corresponding amounts of shift in the x direction.

Panoramic images having more appropriate disparity can be obtained also by performing disparity adjustment of panoramic images by using the amount of offset in this way, and a multi-viewpoint image that provides more natural stereoscopic perception can be displayed.

It should be noted that while it is been described about the example in which the amount of shift is set to be the same as the amount of offset, a value obtained by slightly increasing or decreasing the amount of offset may be used as the amount of shift.

Further, while it has been described above that panoramic images have a wider field of view than captured images, the panoramic images may not necessarily be images with a wider field of view but may be, for example, images with the same field of view as the captured images.

It should be noted that the series of processes described above can be either executed by hardware or executed by software. If the series of processes is to be executed by software, a program constituting the software is installed into a computer embedded in dedicated hardware, or into, for example, a general-purpose personal computer that can execute various kinds of functions when installed with various kinds of programs, from a program-recording medium.

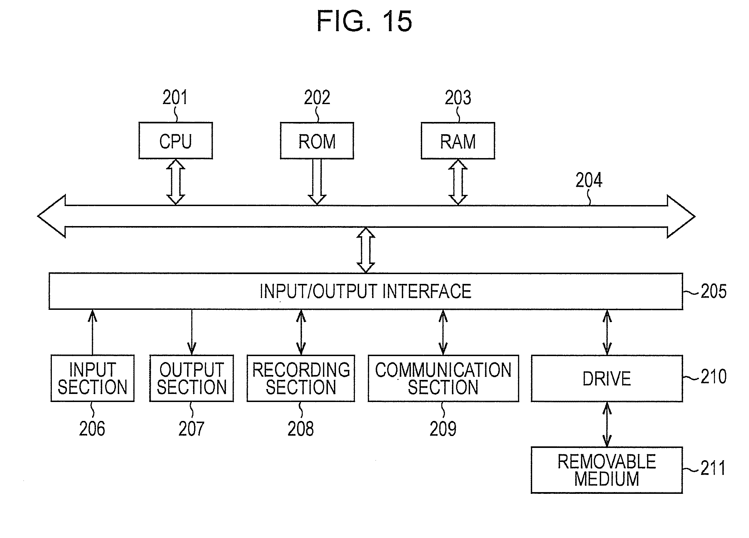

Fig. 15 is a block diagram showing an example of the hardware configuration of a computer that executes the above-mentioned series of processes by a program.

In the computer, a Central Processing Unit (CPU) 201, a Read Only Memory (ROM) 202, and a Random Access Memory (RAM) 203 are connected to each other via a bus 204.

The bus 204 is further connected with an input/output interface 205. The input/output interface 205 is connected with an input section 206 formed by a keyboard, a mouse, a microphone, or the like, an output section 207 formed by a display, a speaker, or the like, a recording section 208 formed by a hard disk, a non-volatile memory, or the like, a communication section 209 formed by a network interface or the like, and a drive 210 for driving a removable medium 211 such as a magnetic disc, an optical disc, a magneto-optical disc, or a semiconductor memory.

In the computer configured as described above, the above-mentioned series of processes is performed when, for example, the CPU 201 loads a program recorded in the recording section 208 into the RAM 203 via the input/output interface 205 and the bus 204, and executes the program.

The program executed by the computer (CPU 201) is provided by being recorded on the removable medium 211 that is a packaged medium formed by, for example, a magnetic disc (including a flexible disc), an optical disc (such as a Compact Disc-Read Only Memory (CD-ROM) or a Digital Versatile Disc (DVD)), a magneto-optical disc, a semiconductor memory, or the like, or via a wired or wireless transmission medium such as a local area network, the Internet, or digital satellite broadcast.

Then, the program can be installed into the recording section 208 via the input/output interface 205, by inserting the removable medium 211 in the drive 210. Also, the program can be received by the communication section 209 via a wired or wireless transmission medium, and installed into the recording section 208. Alternatively, the program can be pre-installed into the ROM 202 or the recording section 208.

It should be noted that the program executed by the computer may be a program in which processes are performed in a time-series fashion in the order as described in this specification, or may be a program in which processes are performed in parallel, or at necessary timing such as when invoked.

It should be noted that embodiments of the present invention are not limited to the above-described embodiments, and various modifications are possible without departing from the scope of the present invention. Reference Signs List

| | |
|---|---|
| 11 | imaging apparatus |
| 12 | display section |
| 21 | imaging section |
| 22 | motion computing section |
| 23 | strip region determining section |
| 24 | synthesizing region determining section |
| 25-1 to 25-N, 25 | panoramic image generating section |
| 26 | disparity controlling section |
| 27 | display selecting section |
| 28 | display section |
| 51 | strip region determining section |
| 52 | display selecting section |

**Claims**

1. An image processing apparatus which generates a plurality of synthetic images used for generation of a multi-viewpoint image and having disparity with respect to each other, on the basis of a plurality of captured images obtained by capturing with imaging means while moving the imaging means, comprising:

   strip region determining means for determining, for each of the synthetic images, strip regions in each of the captured images from which images used for generation of each of the synthetic images are extracted, on the basis of information indicating a viewing environment of the multi-viewpoint image;
   synthetic image generating means for generating each of the synthetic images by extracting the images in the strip regions from the captured images and synthesizing the images; and
   multi-viewpoint image generating means for generating the multi-viewpoint image, in which a subject whose disparity varies with a viewpoint position of a user is displayed stereoscopically, by using the synthetic images.

2. The image processing apparatus according to Claim 1, wherein the strip region determining means determines respective positions of the strip regions so that the strip regions in each of the captured images are in a positional relation determined by a screen size of a display destination for the multi-viewpoint image which is indicated by the information indicating the viewing environment.

3. The image processing apparatus according to Claim 2, wherein the strip region determining means determines the positions of the strip regions so that in each of the captured images, a distance between the strip regions that are adjacent to each other becomes shorter for the strip regions located closer to an edge of each of the captured images.

4. An image processing method for an imaging processing apparatus that generates a plurality of synthetic images used for generation of a multi-viewpoint image and having disparity with respect to each other, on the basis of a plurality of captured images obtained by capturing with imaging means while moving the imaging means, the image processing apparatus including

strip region determining means for determining, for each of the synthetic images, strip regions in each of the captured images from which images used for generation of each of the synthetic images are extracted, on the basis of information indicating a viewing environment of the multi-viewpoint image,

synthetic image generating means for generating each of the synthetic images by extracting the images in the strip regions from the captured images and synthesizing the images, and

multi-viewpoint image generating means for generating the multi-viewpoint image, in which a subject whose disparity varies with a viewpoint position of a user is displayed stereoscopically, by using the synthetic images, the image processing method comprising the steps of:

the strip region determining means determining the strip regions on the basis of the information indicating the viewing environment;

the synthetic image generating means generating each of the synthetic images by extracting the images in the strip regions; and

the multi-viewpoint image generating means generating the multi-viewpoint image by using the synthetic images.

5. A program for causing a computer to execute processing, the computer controlling an image processing apparatus that generates a plurality of synthetic images used for generation of a multi-viewpoint image and having disparity with respect to each other, on the basis of a plurality of captured images obtained by capturing with imaging means while moving the imaging means, the processing including the steps of:

determining, for each of the synthetic images, strip regions in each of the captured images from which images used for generation of each of the synthetic images are extracted, on the basis of information indicating a viewing environment of the multi-viewpoint image;

generating each of the synthetic images by extracting the images in the strip regions from the captured images and synthesizing the images; and

generating the multi-viewpoint image, in which a subject whose disparity varies with a viewpoint position of a user is displayed stereoscopically, by using the synthetic images.

6. An image processing apparatus which generates a plurality of synthetic images used for generation of a multi-viewpoint image and having disparity with respect to each other, on the basis of a plurality of captured images obtained by capturing with imaging means while moving the imaging means, comprising:

strip region determining means for determining, for each of the synthetic images, strip regions in each of the captured images from which images used for generation of each of the synthetic images are extracted;

synthetic image generating means for generating each of the synthetic images by extracting the images in the strip regions from the captured images and synthesizing the images; and

multi-viewpoint image generating means for selecting several of the synthetic images on the basis of information indicating a viewing environment of the multi-viewpoint image, and generating the multi-viewpoint image, in which a subject whose disparity varies with a viewpoint position of a user is displayed stereoscopically, by using the selected synthetic images.

7. The image processing apparatus according to Claim 6, wherein the multi-viewpoint image generating means generates the multi-viewpoint image by selecting the synthetic images generated from the images in the strip regions that are in a positional relation determined by a screen size of a display destination for the multi-viewpoint image which is indicated by the information indicating the viewing environment.

8. The image processing apparatus according to Claim 7, wherein the multi-viewpoint image generating means generates the multi-viewpoint image anew when the viewing environment is changed, on the basis of information indicating the changed viewing environment.

9. The image processing apparatus according to Claim 8, wherein the multi-viewpoint image generating means changes the positional relation determined by the screen size when a change is made to a display magnification of the multi-viewpoint image as the viewing environment, in accordance with the change in the display magnification.

**10.** An image processing method for an imaging processing apparatus that generates a plurality of synthetic images used for generation of a multi-viewpoint image and having disparity with respect to each other, on the basis of a plurality of captured images obtained by capturing with imaging means while moving the imaging means, the image processing apparatus including

strip region determining means for determining, for each of the synthetic images, strip regions in each of the captured images from which images used for generation of each of the synthetic images are extracted,

synthetic image generating means for generating each of the synthetic images by extracting the images in the strip regions from the captured images and synthesizing the images, and

multi-viewpoint image generating means for selecting several of the synthetic images on the basis of information indicating a viewing environment of the multi-viewpoint image, and generating the multi-viewpoint image, in which a subject whose disparity varies with a viewpoint position of a user is displayed stereoscopically, by using the selected synthetic images, the imaging processing method comprising the steps of:

the strip region determining means determining the strip regions in each of the captured images;

the synthetic image generating means generating each of the synthetic images by extracting the images in the strip regions and synthesizing the images; and

the multi-viewpoint image generating means generating the multi-viewpoint image by using the synthetic images, on the basis of the information indicating the viewing environment.

**11.** A program for causing a computer to execute processing, the computer controlling an image processing apparatus that generates a plurality of synthetic images used for generation of a multi-viewpoint image and having disparity with respect to each other, on the basis of a plurality of captured images obtained by capturing with imaging means while moving the imaging means, the processing including the steps of:

determining, for each of the synthetic images, strip regions in each of the captured images from which images used for generation of each of the synthetic images are extracted;

generating each of the synthetic images by extracting the images in the strip regions from the captured images and synthesizing the images; and

selecting several of the synthetic images on the basis of information indicating a viewing environment of the multi-viewpoint image, and generating the multi-viewpoint image, in which a subject whose disparity varies with a viewpoint position of a user is displayed stereoscopically, by using the selected synthetic images.

FIG. 1

# FIG. 2

FIG. 3

# FIG. 4

```
START OF MULTI-VIEWPOINT
IMAGE DISPLAY PROCESS
```

CAPTURE — S11

COMPUTE MOTION COMPENSATION PARAMETERS — S12

SET NUMBER AND AMOUNTS OF OFFSET OF STRIP REGIONS — S13

DETERMINE STRIP REGIONS — S14

DETERMINE SYNTHESIZING REGION — S15

GENERATE PANORAMIC IMAGES — S16

DETECT DOMINANT DISPARITY — S17

PERFORM DISPARITY ADJUSTMENT — S18

GENERATE MULTI-VIEWPOINT IMAGE — S19

DISPLAY MULTI-VIEWPOINT IMAGE — S20

END

## FIG. 5

FIG. 6

FIG. 7

## FIG. 8

## FIG. 9

# FIG. 10

# FIG. 11

# FIG. 12

START OF MULTI-VIEWPOINT
IMAGE DISPLAY PROCESS

CAPTURE — S51

COMPUTE MOTION COMPENSATION PARAMETERS — S52

DETERMINE STRIP REGIONS — S53

DETERMINE SYNTHESIZING REGION — S54

GENERATE PANORAMIC IMAGES — S55

DETECT DOMINANT DISPARITY — S56

PERFORM DISPARITY ADJUSTMENT — S57

GENERATE MULTI-VIEWPOINT IMAGE — S58

DISPLAY MULTI-VIEWPOINT IMAGE — S59

S60
VIEWING ENVIRONMENT CHANGED?
YES
NO

S61
END?
NO
YES

END

# FIG. 13

EP 2 389 005 A1

# FIG. 14

EP 2 389 005 A1

# FIG. 15

EP 2 389 005 A1

<table>
<tr><td colspan="2" align="center">**INTERNATIONAL SEARCH REPORT**</td><td>International application No.<br>PCT/JP2010/072733</td></tr>
</table>

A.   CLASSIFICATION OF SUBJECT MATTER
*H04N13/00*(2006.01)i, *H04N5/225*(2006.01)i

According to International Patent Classification (IPC) or to both national classification and IPC

B.   FIELDS SEARCHED

Minimum documentation searched (classification system followed by classification symbols)
H04N13/00, H04N5/225

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2003-524927 A  (Yissum Research Development Company of the Hebrew University of Jerusalem), 19 August 2003 (19.08.2003), entire text; all drawings & JP 2010-166596 A      & US 6665003 B1 & WO 2000/039995 A2      & DE 69940253 D & AU 3982600 A           & IL 136128 D & AT 420528 T | 1-11 |
| A | JP 8-322004 A  (Olympus Optical Co., Ltd.), 03 December 1996 (03.12.1996), entire text; all drawings & US 5825456 A | 1-11 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 February, 2011 (03.02.11) | Date of mailing of the international search report<br>15 February, 2011 (15.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/072733 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-225202 A (Kyocera Corp.), 12 August 1994 (12.08.1994), entire text; all drawings (Family: none) | 1-11 |

Form PCT/ISA/210 (continuation of second sheet) (July 2009)

**EP 2 389 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3168443 B